# EUROPEAN PATENT APPLICATION

(11) **EP 4 464 208 A1**
(43) Date of publication of application: **20.11.2024**
(21) Application number: 22919982.3
(22) Date of filing: 09.12.2022
(51) Int. Cl.: A47J 36/00, A47J 36/34, A47J 27/00

(54) **SEASONING BOX AND COOKING APPARATUS**

(30) Priority: 17.01.2022 CN 202220133905 U
(71) Applicant: Shenzhen Botinkit Co., Ltd., Shenzhen, Guangdong 518000 (CN)
(72) Inventor: LIU, Fuzhuang, Shenzhen, Guangdong 518000 (CN); FU, Qiang, Shenzhen, Guangdong 518000 (CN)
(74) Representative: Cleanthous, Marinos
(86) International application number: PCT/CN2022/137753
(87) International publication number: WO 2023/134349

(57) **Abstract**

Embodiments of the present application disclose a seasoning box and a cooking device. The seasoning box comprises a seasoning box body and a mounting base, wherein a first connector is provided on the seasoning box body, a second connector is provided on the mounting base, the first connector and the second connector are attracted and fixed through a magnetic attraction member, a guide member is provided on an engaging surface between the first connector and the second connector, and the guide member is arranged along a moving direction of the second connector. According to the seasoning box of the present application, when the second connector is fixed to the first connector, the magnetic attraction force between the first connector and the second connector is mutually attracted, and the second connector is guided to move.

## Description

### TECHNICAL FIELD

Embodiments of the present application relate to the technical field of cooking utensils, and in particular, to a seasoning box and a cooking device.

### BACKGROUND

With the acceleration of pace of life, more and more people need a cooking device that can automatically perform stir-frying so as to free hands, and is convenient and fast. An automatic stir fry machine is controlled by a microcomputer to achieve automatic stir-frying without human supervision. It achieves multiple uses of one pot, saves time and labor, and is free of oily smoke. Therefore, this automatic stir fry machine is favored by more and more users.

At present, when a cooking device works, a plurality of seasoning boxes of different categories need to be arranged so as to meet the requirements of cooking different dishes. In the prior art, the process of adding seasoning into the seasoning box is to take out the seasoning box, add seasoning into the seasoning box and then mount the seasoning box, and the mounting of the seasoning box is completed by the effect of magnetic attraction. However, this mounting mode has a low mounting precision, is not beneficial to quickly plugging and unplugging the seasoning box, and is not convenient for adding seasoning or replacing the seasoning box.

### SUMMARY

Embodiments of the present application provide a seasoning box and a cooking device, so as to solve the technical problem that the seasoning box is high in mounting precision requirement and is inconvenient to rapidly disassemble and supplement.

To achieve the objective, the present application adopts the following technical solutions.

An embodiment of the present application provides a seasoning box, which comprises a seasoning box body and a mounting base, wherein a first connector is provided on the seasoning box body, a second connector is provided on the mounting base, the first connector and the second connector are attracted and fixed through a magnetic attraction member, a guide member is provided on an engaging surface between the first connector and the second connector, and the guide member is arranged along a moving direction of the second connector.

In an embodiment, an end portion of the second connector is a second attracting portion, an end portion of the first connector is provided with a first attracting portion engaging with the second attracting portion, and the guide member is arranged on the first attracting portion.

In an embodiment, the first attracting portion is provided with an annular engaging portion engaging with the second attracting portion, and the guide member is arranged on a peripheral wall of the annular engaging portion.

In an embodiment, at least three guide members are provided.

In an embodiment, a buffer member is provided on the first attracting portion.

In an embodiment, a guide block is provided on the first connector along a moving direction of the second connector to form the guide member, and an outer end of the guide block is provided with an inclined surface.

In an embodiment, the seasoning box body is provided with at least two number positions, the number positions are provided with sensing elements, and the mounting base is provided with sensing switches corresponding to the sensing elements.

In an embodiment, the seasoning box body is hollowed with a number hole, and the sensing element is arranged in the number hole.

A cooking device comprises a seasoning box according to any one of the above.

In an embodiment, the cooking device comprises at least two seasoning boxes, the number position of each of the seasoning boxes is provided with the sensing element in the corresponding number, and the mounting base is provided with the sensing switches corresponding to the seasoning boxes one to one.

The present application has the following beneficial effects:

According to the present application, the seasoning box is provided with the guide member on the first connector, the arrangement direction of the guide member is along the moving direction of the second connector, when the second connector (a floating connector) is fixed to the first connector (a fixed connector), the magnetic attraction force between the first connector and the second connector is mutually attracted, the second connector is guided to move, and the guide member arranged on the first connector can further guide the moving direction of the second connector, so that the first connector and the second connector are stably connected.

According to the cooking device, the number positions are arranged on the seasoning box bodies, the seasoning box bodies filled with different seasonings are numbered differently, the corresponding number positions are provided with the corresponding sensing elements, and the mounting base is provided with the sensing switches corresponding to the sensing elements, so that the seasoning box can be prevented from being placed in a wrong position, a foolproof effect is achieved, and better use experience is brought to a user.

### BRIEF DESCRIPTION OF DRAWINGS

To more clearly illustrate the technical solutions in the embodiments of the present application or in the prior art, the accompanying drawings needed to be used in the description of the embodiments or in the prior art are briefly introduced below. It is clear that the accompanying drawings in the following descriptions are some embodiments of the present application, and those of ordinary skill in the art may still derive other drawings from these accompanying drawings without creative efforts.
FIG. 1 is a schematic diagram of a structure of a seasoning box according to an embodiment of the present application;
FIG. 2 is a schematic diagram of a structure of a seasoning box body of a seasoning box according to an embodiment of the present application;
FIG. 3 is a front view of a seasoning box body of a seasoning box according to an embodiment of the present application; and
FIG. 4 is a schematic diagram of a structure of a mounting base according to an embodiment of the present application.
10: seasoning box body, 110: first connector, 112: magnetic attraction member (magnetically attracted member), 113: engaging surface, 114: guide member, 115: inclined surface, 116: buffer member, 117: number position, 118: sensing element, 20: mounting base, 201: mounting plate, 210: second connector, 211: magnetic attraction member (magnetically attracted member), and 212: sensing switch.

### DETAILED DESCRIPTION OF EMBODIMENTS

To make the objectives, technical solutions and advantages of the present application clearer, the technical solution of the present application will be described in detail through implementations with reference to the accompanying drawings in the embodiments of the present application. It is clear that the described embodiments are merely some rather than all of embodiments of the present application, and the embodiments of the present application and features in the embodiments can be combined with each other without conflict. All other embodiments obtained by those of ordinary skill in the art based on embodiments of the present application without creative efforts shall fall within the protection scope of the present application.

It should be noted that, in the accompanying drawings, the same or similar reference numerals indicate the same or similar elements or elements having the same or similar functions throughout; in the description of the present invention, the directions or positional relationships indicated by terms "central", "longitudinal", "lateral", "front", "rear", "left", "right", "vertical", "horizontal", "top", "bottom", "inner", "outer", and the like are those shown based on the accompanying drawings, and are merely intended to facilitate and simplify description of the present application rather than indicate or imply that the indicated apparatus or element must have a specific direction and must be configured and operated according to the specific direction, and therefore, these directions or positional relationships should not be construed as limiting the present invention; and in the description of the present application, "first", "second", and the like are only used to distinguish each other, rather than to indicate the importance and order.

In the description of the present application, unless otherwise expressly specified and limited, terms "mount", "interconnect", and "connect" should be understood in a broad sense. For example, such terms may indicate a fixed connection, a movable connection, or a detachable connection; may indicate a mechanical connection or an electrical connection; and may indicate direct interconnection, indirect interconnection through an intermediate medium, or internal communication between two elements. Those of ordinary skill in the art may understand specific meanings of the foregoing terms in the present application based on a specific situation.

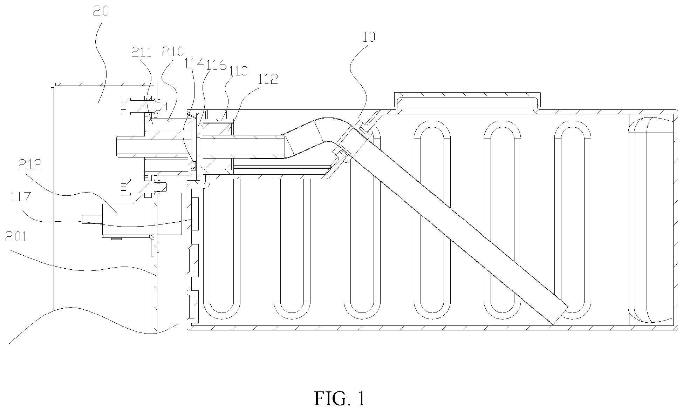

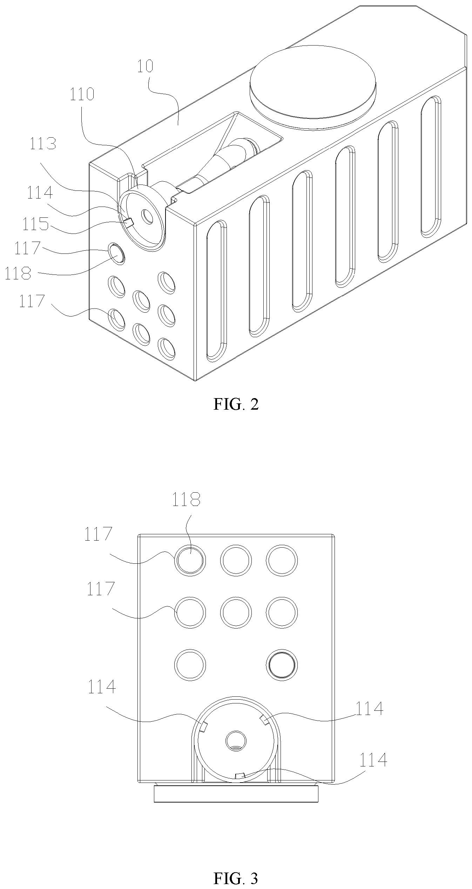

As shown in FIG. 1 and FIG. 2, an embodiment of the present application provides a seasoning box, which comprises a seasoning box body 10 and a mounting base 20, wherein a first connector 110 is provided on the seasoning box body 10, a second connector 210 is provided on the mounting base 20, a magnetic attraction member 112 of the first connector 110 is attracted and fixed to a magnetic attraction member 211 of the second connector 210, a guide member 213 is provided on an engaging surface 113 between the first connector 110 and the second connector 210, and the guide member 114 is arranged along a moving direction of the second connector 210. Of course, the magnetic attraction member 112 of the first connector 110 and the magnetic attraction member 211 of the second connector 210 can be any combination of a magnetic attraction member and a magnetically attracted element attracted to each other.

As shown in FIG. 2 and FIG. 3, the seasoning box is provided with the guide member 114 on the first connector 110, the arrangement direction of the guide member 114 is along the moving direction of the second connector 210, when the second connector 210 (a floating connector) is fixed to the first connector 110 (a fixed connector), the first connector 110 and the second connector 210 are attracted to each other by the magnetic attraction force between the magnetic attraction member 112 arranged on the first connector 110 and the magnetic attraction member 212 arranged on the second connector 210, the second connector 210 is guided to move, and the guide member arranged on the first connector 110 can further guide the moving direction of the second connector 210, so that the first connector 110 and the second connector 210 are stably connected.

An end portion of the second connector 210 is a second attracting portion, an end portion of the first connector 110 is provided with a first attracting portion engaging with the second attracting portion, and the guide member 114 is arranged on the first attracting portion. The first attracting portion is provided with an annular engaging portion engaging with the second attracting portion, the engaging surface 113 is an inner wall of the annular engaging portion, and the guide member 114 is arranged on a peripheral wall of the annular engaging portion. When the second connector 210 is fixed to the first connector 110, the second attracting portion is a truncated cone-shaped structure, and the diameter of the second attracting portion gradually decreases from a front end to a rear end, so that the second attracting portion can easily extend into the first attracting portion, and the first connector 110 is fixedly connected to the second connector 210. At least three guide members 114 are provided. In this embodiment, preferably, three guide elements 114 are provided, and three guide elements 114 are annularly and uniformly arranged on the peripheral wall of the annular engaging portion.

Further, a guide block is provided on the first connector 110 along a moving direction of the second connector 210 to form the guide member 114, and an outer end of the guide block (the guide member 114) is provided with an inclined surface 115. That is, the guide block is provided with an inclined surface at an outer end of the first connector 110, or the guide block is provided with an inclined surface at an inlet end of the second connector 210. When the second connector 210 contacts with the first connector 110, the second connector 210 can smoothly extend into the first connector 110 by means of the inclined surface on the guide member 114, and stably move forward along the inclined surface 115 under the action of magnetic attraction force until the first connector 110 is stably connected with the second connector 210.

A buffer member 116 is provided on the first attracting portion. When the first connector 110 and the second connector 210 are attracted and connected, the second connector 210 contacts with the buffer member 116, so that the impact of the magnetic attraction force when the first connector 110 is coupled with the second connector 210 is relieved, and the sealing effect can be achieved. This prevents the liquid seasoning from overflowing from the seasoning box body 10 and leaking therefrom.

The seasoning box body 10 is provided with at least two number positions 117, the number positions 117 are provided with sensing elements 118, and the mounting base 20 is provided with sensing switches 212 corresponding to the sensing elements 118. The sensing elements 118 and the sensing switches 212 are arranged in a one-to-one correspondence manner, the sensing elements 118 are only arranged at the corresponding number positions on the seasoning box body 10 with the corresponding number, and when the seasoning box body 10 is mounted, a sensing relationship between the sensing elements 118 and the sensing switches 212 can prevent the seasoning box body 10 from being misplaced. In the embodiment of the present application, the seasoning box body 10 is hollowed with a number hole, and the sensing element 118 is arranged in the number hole.

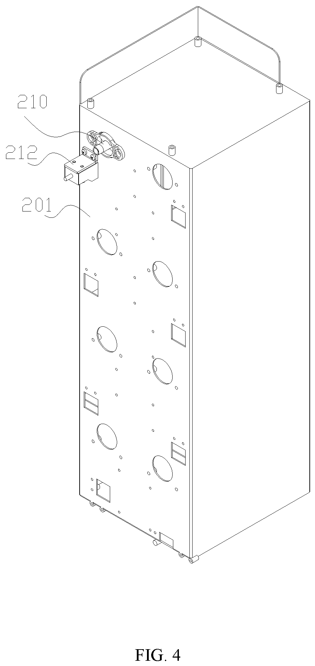

As shown in FIG. 4, the cooking device of the present application is provided with at least two seasoning boxes, that is, at least two seasoning box bodies 10 are provided, and all seasoning box bodies need to be correspondingly mounted on the mounting plate 201 of the mounting base 20; and at least two second connectors 210 and sensing switches 212 are correspondingly arranged on the mounting plate 201. The seasoning box bodies 10 are numbered with different numbers, the corresponding number position 117 is provided with a sensing element 118, the mounting plate 201 of the mounting base 20 is correspondingly provided with the sensing switches 212, and the sensing elements 118 and the sensing switches 212 are in one-to-one correspondence. When the seasoning box body 10 needs to be mounted on the mounting base 20, the first connector 110 of the seasoning box body 10 is aligned with the second connector 210 on the mounting plate 201, the second connector 210 can extend into the first connector 110, and the second connector and the first connector are fixedly connected under the action of magnetic attraction. Meanwhile, due to the engagement of the sensing element 118 and the sensing switch 212, the seasoning box body 10 is prevented from being misplaced, which brings inconvenience to the subsequent cooking work.

It should be noted that the foregoing are merely some embodiments of the present application and applied technical principles. Those skilled in the art may understand that the present application is not limited to specific embodiments described herein, and those skilled in the art may make various significant changes, readjustments, and replacements without departing from the protection scope of the present application. Therefore, although the present application is described in detail by using the foregoing embodiments, the present application is not limited to the foregoing embodiments, and may further include more other equivalent embodiments without departing from the concept of the present application. The scope of the present application is determined by the scope of the appended claims.

## Claims

1. A seasoning box, comprising a seasoning box body and a mounting base, wherein a first connector is provided on the seasoning box body, a second connector is provided on the mounting base, the first connector and the second connector are attracted and fixed through a magnetic attraction member, a guide member is provided on an engaging surface between the first connector and the second connector, and the guide member is arranged along a moving direction of the second connector.

2. The seasoning box according to claim 1, wherein an end portion of the second connector is a second attracting portion, an end portion of the first connector is provided with a first attracting portion engaging with the second attracting portion, and the guide member is arranged on the first attracting portion.

3. The seasoning box according to claim 2, wherein the first attracting portion is provided with an annular engaging portion engaging with the second attracting portion, and the guide member is arranged on a peripheral wall of the annular engaging portion.

4. The seasoning box according to claim 3, wherein at least three guide members are provided.

5. The seasoning box according to claim 2, wherein a buffer member is provided on the first attracting portion.

6. The seasoning box according to claim 1 or 3, wherein a guide block is provided on the first connector along a moving direction of the second connector to form the guide member, and an outer end of the guide block is provided with an inclined surface.

7. The seasoning box according to claim 1, wherein the seasoning box body is provided with at least two number positions, the number positions are provided with sensing elements, and the mounting base is provided with sensing switches corresponding to the sensing elements.

8. The seasoning box according to claim 1, wherein the seasoning box body is hollowed with a number hole, and the sensing element is arranged in the number hole.

9. A cooking device, comprising the seasoning box according to any one of claims 1 to 8.

10. The cooking device according to claim 9, wherein the cooking device comprises at least two seasoning boxes, the number position of each of the seasoning boxes is provided with the sensing element in the corresponding number, and the mounting base is provided with the sensing switches corresponding to the seasoning boxes one to one.
